# EUROPEAN PATENT APPLICATION

(11) **EP 4 797 784 A1**
(43) Date of publication of application: **26.08.2026**
(21) Application number: 24890420.3
(22) Date of filing: 17.10.2024
(51) Int. Cl.: H04W 28/02

(54) **COMMUNICATION METHOD AND APPARATUS**

(30) Priority: 13.11.2023 CN 202311511873
(71) Applicant: HUAWEI TECHNOLOGIES CO., LTD., Shenzhen, Guangdong 518129 (CN)
(72) Inventor: YANG, Liu, Shenzhen, Guangdong 518129 (CN); SHI, Meng, Shenzhen, Guangdong 518129 (CN); LIAO, Shuri, Shenzhen, Guangdong 518129 (CN); ZHANG, Xiaoyu, Shenzhen, Guangdong 518129 (CN); DOU, Shengyue, Shenzhen, Guangdong 518129 (CN)
(74) Representative: Grünecker Patent- und Rechtsanwälte PartG mbB
(86) International application number: PCT/CN2024/125405
(87) International publication number: WO 2025/103062

(57) **Abstract**

Embodiments of this application disclose a communication method and apparatus. The method includes: receiving first ephemeris information of a serving satellite sent by a network device, where the first ephemeris information includes first indication information, and the first indication information is used to indicate a threshold for a coverage edge footprint of the serving satellite; and determining, based on the first ephemeris information, whether to start obtaining other system information OSI broadcast by the network device at the coverage edge footprint, where the OSI is related to mobility management. According to the embodiments of this application, the network device broadcasts only the OSI related to mobility management at the coverage edge footprint of the serving satellite, thereby reducing broadcast resource overheads. In addition, after determining that an edge of coverage is reached, the OSI obtaining procedure is started, and the network device does not need to page the terminal to receive the OSI, thereby reducing paging overheads.

## Description

This application claims priority to Chinese Patent Application No. 202311511873.4, filed on November 13, 2023 and entitled "COMMUNICATION METHOD AND DEVICE", which is incorporated herein by reference in its entirety.

### Technical Field

This application relates to the field of communication technologies, and in particular, to a communication method and apparatus.

### Background

A non-terrestrial communication network (NTN) refers to a network that utilizes satellite, unmanned aircraft system (UAS) platforms, and high altitude platform station (HAPS) to transmit radio frequency resources. Compared to terrestrial cellular networks using the 5th-generation (5G) mobile communication technology, NTN networks offer advantages such as extensive coverage, lower latency, broadband capabilities, and lower costs. As a complement and extension to terrestrial networks, NTN networks can achieve seamless, wide-area coverage that neither wired telephone networks nor terrestrial mobile communication networks can provide, effectively addressing internet access issues in regions with inadequate communication infrastructure. With a large number of satellites deployed in low Earth orbit, the round-trip transmission delay of data between satellites and ground terminals is significantly reduced to a low level of tens of milliseconds. The use of technologies such as high frequency bands, multi-spot beams, and frequency reuse significantly enhances the communication capabilities of satellites, reduces the cost per unit of broadband, and meets the needs of high information rate services. Compared to terrestrial 5G base stations and submarine fiber optic cables, NTN networks have a significant cost advantage. Modern small satellites have low development and manufacturing costs, and software-defined technologies can further extend the operational life of satellites in orbit. NTN networks can be applied in scenarios such as global coverage (e.g., remote areas, ocean-going vessels), emergency disaster relief (e.g., disaster monitoring, emergency communication), the Internet of Things (IoT), and high-speed mobility (e.g., high-speed trains, airplanes).

The system information broadcast method of new radio (new radio, NR) is similar to that of long term evolution (long term evolution, LTE). The transmission period of the master information block (MIB) is 80 ms, and the transmission period of the system information block 1 (system information block 1, SIB1) is variable, and does not exceed 160 ms. Other SIBs are combined to form other system information (other system information, OSI) for broadcast. However, in a single-satellite single-cell scenario, there are a large number of footprints within the satellite coverage area, and if OSI is broadcast on all footprints within the satellite coverage area, a large amount of resource overhead is caused.

### SUMMARY

Embodiments of this application provide a communication method and apparatus, which can reduce broadcast resource overhead and paging overhead.

According to a first aspect, an embodiment of this application provides a communication method, where the method is applied to a terminal device or a chip or circuit configured in a terminal device, and includes the following steps:
Receiving first ephemeris information of a serving satellite sent by a network device, where the first ephemeris information includes first indication information, and the first indication information is used to indicate a threshold for a coverage edge footprint of the serving satellite; and determining, based on the first ephemeris information, whether to start obtaining other system information OSI broadcast by the network device at the coverage edge footprint, wherein the OSI is related to mobility management.

The network device broadcasts the OSI related to mobility management only at the coverage edge footprint of the serving satellite, thereby reducing broadcast resource overheads without affecting a terminal device in performing cell reselection/conditional handover. The terminal device determines, based on the threshold of the coverage edge footprint of the serving satellite indicated by the first indication information, whether the terminal device is at the coverage edge footprint. If the terminal device is at the coverage edge footprint, the terminal device starts an OSI obtaining procedure, and the network device does not need to page the terminal device to receive the OSI, thereby reducing paging overheads. If the terminal device is not at the coverage edge footprint, the terminal device does not start the OSI obtaining procedure, thereby reducing power consumption of the terminal device.

In a possible design, the first ephemeris information further includes the ephemeris of the serving satellite, where the horizontal distance component and the vertical distance component between the terminal device and the reference location of the serving satellite are determined based on the location information of the terminal device and the ephemeris of the serving satellite; and whether to initiate obtaining the OSI broadcast by the network device at the coverage edge footprint is determined based on the horizontal distance component, the vertical distance component, and the first indication information. In a scenario where the ground coverage area of the serving satellite is a rectangle, the terminal device determines whether the terminal device is at the coverage edge footprint by determining the horizontal distance component and the vertical distance component between the terminal device and the reference location of the serving satellite, thereby improving the accuracy of determining whether to initiate an OSI procedure.

In a possible design, the first indication information includes a horizontal distance threshold and a vertical distance threshold; and when the horizontal distance component is greater than or equal to the horizontal distance threshold, or the vertical distance component is greater than or equal to the vertical distance threshold, it is determined that the terminal device is at the coverage edge footprint of the serving satellite, and obtaining the OSI broadcast by the network device at the coverage edge footprint is initiated; or when the horizontal distance component is less than the horizontal distance threshold, and the vertical distance component is less than the vertical distance threshold, it is determined that the terminal device is not at the coverage edge footprint of the serving satellite, and obtaining the OSI broadcast by the network device at the coverage edge footprint is not initiated. Since the terminal device initiates the OSI obtaining procedure only when the terminal device is at the coverage edge footprint, the network device does not need to page the terminal device to receive the OSI, thereby reducing paging overheads.

In a possible design, the reference location of the serving satellite is the location under the satellite of the serving satellite, or the center point of the ground coverage area of the serving satellite.

In a possible design, the first ephemeris information further includes the ephemeris of the serving satellite; and the first distance between the terminal device and the serving satellite is determined based on the location information of the terminal device and the ephemeris of the serving satellite; and whether to initiate obtaining the OSI broadcast by the network device at the coverage edge footprint is determined based on the first distance and the first indication information. In a scenario where the ground coverage area of the serving satellite is a circle, the first distance between the terminal device and the serving satellite is determined to determine whether the terminal device is at the coverage edge footprint, thereby improving the accuracy of determining whether to initiate an OSI procedure.

In a possible design, the first indication information includes a first distance threshold; and when the first distance is greater than or equal to the first distance threshold, it is determined that the terminal device is at the coverage edge footprint of the serving satellite, and initiating obtaining the OSI broadcast by the network device at the coverage edge footprint is initiated; or when the first distance is less than the first distance threshold, it is determined that the terminal device is not at the coverage edge footprint of the serving satellite, and initiating obtaining the OSI broadcast by the network device at the coverage edge footprint is not initiated. Because the terminal device initiates an OSI obtaining procedure only when the terminal device is at the coverage edge footprint, the network device does not need to page the terminal device to receive the OSI, thereby reducing paging overheads.

In a possible design, the first ephemeris information further includes the ephemeris of the serving satellite, where the first angle between the line connecting the terminal device to the serving satellite and the tangent of the Earth's surface is determined based on the location information of the terminal device and the ephemeris of the serving satellite; and whether to initiate obtaining the OSI broadcasted by the network device at the coverage edge footprint is determined based on the first angle and the first indication information. In a scenario where the ground coverage area of the serving satellite is circular, whether the terminal device is at the coverage edge footprint is determined by the first angle between the line connecting the terminal device to the serving satellite and the tangent of the Earth's surface, thereby improving the accuracy of determining whether to initiate the OSI procedure.

In a possible design, the first indication information includes an elevation angle threshold; and when the first angle is less than or equal to the elevation angle threshold, it is determined that the terminal device is at the coverage edge footprint of the serving satellite, and obtaining the OSI broadcasted by the network device at the coverage edge footprint is initiated; or when the first angle is greater than the elevation angle threshold, it is determined that the terminal device is not at the coverage edge footprint of the serving satellite, and obtaining the OSI broadcasted by the network device at the coverage edge footprint is not initiated. Since the terminal device initiates the OSI obtaining procedure only when the terminal device is at the coverage edge footprint, the network device does not need to page the terminal device to receive the OSI, thereby reducing paging overheads.

In a possible design, the first ephemeris information further includes the ephemeris and coverage information of the serving satellite; and a ground coverage area of the serving satellite is determined based on the ephemeris and the coverage information of the serving satellite; a minimum distance between the terminal device and an edge of the ground coverage area is determined based on the location information of the terminal device and the ground coverage area; and whether to initiate obtaining of other system information OSI broadcast by the network device at the coverage edge footprint is determined based on the minimum distance and the first indication information. In a scenario where the ground coverage area of the serving satellite is not a circle, the terminal device determines whether the terminal device is at the coverage edge footprint by determining the minimum distance between the terminal device and the edge of the ground coverage area, thereby improving the accuracy of determining whether to initiate an OSI procedure.

In a possible design, the first indication information includes a second distance threshold; and when the minimum distance is less than or equal to the second distance threshold, it is determined that the terminal device is at the coverage edge footprint of the serving satellite, and obtaining of the OSI broadcast by the network device at the coverage edge footprint is initiated; or when the minimum distance is greater than the second distance threshold, it is determined that the terminal device is not at the coverage edge footprint of the serving satellite, and obtaining of the OSI broadcast by the network device at the coverage edge footprint is not initiated. Because the terminal device initiates the OSI obtaining procedure only when the terminal device is at the coverage edge footprint, the network device does not need to page the terminal device to receive the OSI, thereby reducing paging overheads.

In a possible design, the coverage information includes at least one of the following information: a maximum scanning angle, a coverage radius, a maximum horizontal scanning angle, a maximum vertical scanning angle, a horizontal coverage width, or a vertical coverage width.

In a possible design, a cell reselection parameter and/or second ephemeris information of a neighboring satellite is obtained from the OSI; and performs cell reselection or cell handover based on the cell reselection parameter and/or the second ephemeris information, so as to reselect or switch to a cell of the neighboring satellite, thereby ensuring communication quality between the terminal device and the satellite.

According to a second aspect, an embodiment of this application provides a communication method, where the method is applied to a network device, or a chip or circuit configured in a network device, and includes the following steps:
sending first ephemeris information of a serving satellite, where the first ephemeris information includes first indication information, and the first indication information is used to indicate a threshold for an coverage edge footprint of the serving satellite; and broadcasting other system information OSI at the coverage edge footprint, where the OSI is related to mobility management. The network device broadcasts the OSI related to mobility management only at the coverage edge footprint of the serving satellite, thereby reducing broadcast resource overheads without affecting the terminal device to perform cell reselection/conditional handover.

In a possible design, the first ephemeris information further includes at least one of the following information: ephemeris of the serving satellite, or coverage information of the serving satellite.

In a possible design, the first indication information includes at least one of the following information:
a horizontal distance threshold and a vertical distance threshold between the terminal device and the reference location of the serving satellite, an elevation angle threshold between an inclination of a line connecting the terminal device to the serving satellite and a tangent of an earth surface, a first distance threshold between the terminal device and the serving satellite, and a second distance threshold between the terminal device and an edge of a ground coverage area of the serving satellite.

In a possible design, the reference location of the serving satellite is the nadir point of the serving satellite on the earth, or a center point of the ground coverage area of the serving satellite.

According to a third aspect, an embodiment of this application provides a communications apparatus, including:
a receiving module, configured to receive first ephemeris information of a serving satellite sent by a network device, wherein the first ephemeris information comprises first indication information, and the first indication information is used to indicate a threshold for a coverage edge footprint of the serving satellite;
a processing module, configured to determine, based on the first ephemeris information, whether to start obtaining other system information OSI broadcast by the network device at the coverage edge footprint, wherein the OSI is related to mobility management.

In a possible design, the first ephemeris information further comprises ephemeris information of the serving satellite; and the processing module is further configured to determine a horizontal distance component and a vertical distance component between the terminal device and a reference location of the serving satellite based on location information of the terminal device and the ephemeris information of the serving satellite; and determine, based on the horizontal distance component, the vertical distance component, and the first indication information, whether to start obtaining the OSI broadcast by the network device at the coverage edge footprint.

In a possible design, the first indication information includes a horizontal distance threshold and a vertical distance threshold;
the processing module is further configured to: when the horizontal distance component is greater than or equal to the horizontal distance threshold, or when the vertical distance component is greater than or equal to the vertical distance threshold, determine that the terminal device is at the coverage edge footprint of the serving satellite, and start obtaining the OSI broadcast by the network device at the coverage edge footprint; or when the horizontal distance component is less than the horizontal distance threshold, and the vertical distance component is less than the vertical distance threshold, determine that the terminal device is not at the coverage edge footprint of the serving satellite, and do not start obtaining the OSI broadcast by the network device at the coverage edge footprint.

In a possible design, the reference location of the serving satellite is the location under the serving satellite, or a center point of a ground coverage area of the serving satellite.

In a possible design, the first ephemeris information further includes an ephemeris of the serving satellite;

The processing module is further configured to determine a first distance between the terminal device and the serving satellite based on the location information of the terminal device and the ephemeris of the serving satellite; and determine, based on the first distance and the first indication information, whether to start obtaining the OSI broadcast by the network device at the coverage edge footprint of the serving satellite.

In a possible design, the first indication information includes a first distance threshold;

The processing module is further configured to: when the first distance is greater than or equal to the first distance threshold, determine that the terminal device is at the coverage edge footprint of the serving satellite, and start obtaining the OSI broadcast by the network device at the coverage edge footprint of the serving satellite; or when the first distance is less than the first distance threshold, determine that the terminal device is not at the coverage edge footprint of the serving satellite, and do not start obtaining the OSI broadcast by the network device at the coverage edge footprint of the serving satellite.

In a possible design, the first ephemeris information further includes the ephemeris of the serving satellite;

The processing module is further configured to determine, based on the location information of the terminal device and the ephemeris of the serving satellite, a first angle between a line connecting the terminal device and the serving satellite and a tangent line of the Earth surface; and determine, based on the first angle and the first indication information, whether to start obtaining the OSI broadcast by the network device at the coverage edge footprint of the serving satellite.

In a possible design, the first indication information includes an elevation angle threshold;

The processing module is further configured to: when the first angle is less than or equal to the elevation angle threshold, determine that the terminal device is at the coverage edge footprint of the serving satellite, and start obtaining the OSI broadcast by the network device at the coverage edge footprint of the serving satellite; or when the first angle is greater than the elevation angle threshold, determine that the terminal device is not at the coverage edge footprint of the serving satellite, and do not start obtaining the OSI broadcast by the network device at the coverage edge footprint of the serving satellite.

In a possible design, the first ephemeris information further includes the ephemeris and the coverage information of the serving satellite;

The processing module is further configured to determine a ground coverage area of the serving satellite based on the ephemeris of the serving satellite and the coverage information; determine, based on the location information of the terminal device and the ground coverage area, a minimum distance between the terminal device and an edge of the ground coverage area; and determine, based on the minimum distance and the first indication information, whether to start obtaining the other system information OSI broadcast by the network device at the coverage edge footprint.

In a possible design, the first indication information includes a second distance threshold;

The processing module is further configured to: when the minimum distance is less than or equal to the second distance threshold, determine that the terminal device is at the coverage edge footprint of the serving satellite, and start obtaining the OSI broadcast by the network device at the coverage edge footprint; or when the minimum distance is greater than the second distance threshold, determine that the terminal device is not at the coverage edge footprint of the serving satellite, and do not start obtaining the OSI broadcast by the network device at the coverage edge footprint.

In a possible design, the coverage information includes at least one of the following information: a maximum scanning angle, a coverage radius, a maximum horizontal scanning angle, a maximum vertical scanning angle, a horizontal coverage width, or a vertical coverage width.

In a possible design, the processing module is further configured to obtain a cell reselection parameter and/or second ephemeris information of a neighboring satellite from the OSI; and perform cell reselection or cell handover based on the cell reselection parameter and/or the second ephemeris information.

For operations performed by the communication apparatus and beneficial effects thereof, refer to the method and beneficial effects in the first aspect. Repeated parts are not described again.

According to a fourth aspect, an embodiment of this application provides a communication apparatus, including:
a sending module, configured to send first ephemeris information of a serving satellite, wherein the first ephemeris information comprises first indication information, and the first indication information is used to indicate a threshold for a coverage edge footprint of the serving satellite;

The sending module is further configured to broadcast other system information OSI at the coverage edge footprint, where the OSI is related to mobility management.

In a possible design, the first ephemeris information further includes at least one of the following information: ephemeris information of the serving satellite, or coverage information of the serving satellite.

In a possible design, the first indication information includes at least one of the following information: a horizontal distance threshold and a vertical distance threshold between the terminal device and the reference location of the serving satellite, an elevation angle threshold between an inclination line between the terminal device and the serving satellite and a tangent line of the earth surface, a first distance threshold between the terminal device and the serving satellite, and a second distance threshold between the terminal device and an edge of a ground coverage area of the serving satellite.

In a possible design, the reference location of the serving satellite is the nadir point of the serving satellite on the earth, or a center point of the ground coverage area of the serving satellite.

For the operations performed by the communication apparatus and beneficial effects thereof, refer to the method and beneficial effects described in the second aspect. Repeated parts are not described again.

According to a fifth aspect, this application provides a communication apparatus, where the communication apparatus includes a processor and a memory, the memory is configured to store a computer program, and the processor is configured to execute the computer program stored in the memory, so that the communication apparatus performs the method according to any one of the first aspect.

According to a sixth aspect, this application provides a communication apparatus, where the communication apparatus includes a processor and a memory, the memory is configured to store a computer program, and the processor is configured to execute the computer program stored in the memory, so that the communication apparatus performs the method according to any one of the second aspect.

According to a seventh aspect, this application provides a communication apparatus. The apparatus may be a terminal device, an apparatus in a terminal device, or an apparatus that can be used in a matching manner with a terminal device. The communication apparatus may alternatively be a chip system. The communication apparatus may perform the method according to the first aspect. A function of the communication apparatus may be implemented by hardware, or may be implemented by hardware by executing corresponding software. The hardware or software includes one or more modules corresponding to the foregoing functions. The module may be software and/or hardware. For operations performed by the communication apparatus and beneficial effects thereof, refer to the method and beneficial effects described in the first aspect. Repeated parts are not described again.

According to an eighth aspect, this application provides a communications apparatus. The apparatus may be a network device, an apparatus in a network device, or an apparatus that can be used in a matching manner with a network device. The communications apparatus may alternatively be a chip system. The communications apparatus may perform the method according to the second aspect. A function of the communications apparatus may be implemented by hardware, or may be implemented by hardware executing corresponding software. The hardware or the software includes one or more modules corresponding to the foregoing function. The module may be software and/or hardware. For operations performed by the communications apparatus and beneficial effects thereof, refer to the method and beneficial effects according to the second aspect. Details are not described again.

According to a ninth aspect, this application provides a computer-readable storage medium, configured to store a computer program, where when the computer program is executed, the method according to any one of the first aspect and the second aspect is implemented.

According to a tenth aspect, this application provides a computer program product that includes a computer program, where when the computer program is executed, the method according to any one of the first aspect and the second aspect is implemented.

According to an eleventh aspect, an embodiment of this application provides a communications system, where the communications system includes at least one terminal device and at least one network device, the terminal device is configured to perform the steps in the first aspect, and the network device is configured to perform the steps in the second aspect.

According to a twelfth aspect, a chip is provided. The chip includes a processor and a communication interface. The communication interface is configured to communicate with an external device or an internal device. The processor is configured to implement the methods in the foregoing aspects.

In a possible design, the chip may further include a memory. The memory stores a computer program or instructions, and the processor is configured to execute the computer program or the instructions stored in the memory, or the computer program or the instructions are derived from another program or instruction. When the computer program or the instruction is executed, the processor is configured to implement the methods in the foregoing aspects.

In a possible design, the chip may be integrated into a terminal device or a network device.

### Brief Description of the Drawings

FIG. 1 is a schematic architectural diagram of a communications system 100 according to an embodiment of this application;
FIG. 2A is a schematic diagram of an NTN scenario based on a transparent payload;
FIG. 2B is a schematic diagram of an NTN scenario based on a regenerative payload;
FIG. 3 is a schematic diagram of a satellite coverage area;
FIG. 4 is a schematic flowchart of a communication method according to an embodiment of this application;
FIG. 5A is a schematic diagram of a rectangular coverage scenario;
FIG. 5B is a schematic diagram of another rectangular coverage scenario;
FIG. 6A is a schematic diagram of a circular coverage scenario;
FIG. 6B is a schematic diagram of another circular coverage scenario;
FIG. 7 is a schematic diagram of a non-circular coverage scenario;
FIG. 8 is a schematic structural diagram of a communications apparatus according to an embodiment of this application;
FIG. 9 is a schematic structural diagram of a communications apparatus according to an embodiment of this application;
FIG. 10 is a schematic structural diagram of a terminal device according to an embodiment of this application;
FIG. 11 is a schematic structural diagram of a network device according to an embodiment of this application.

### Detailed Description of Embodiments

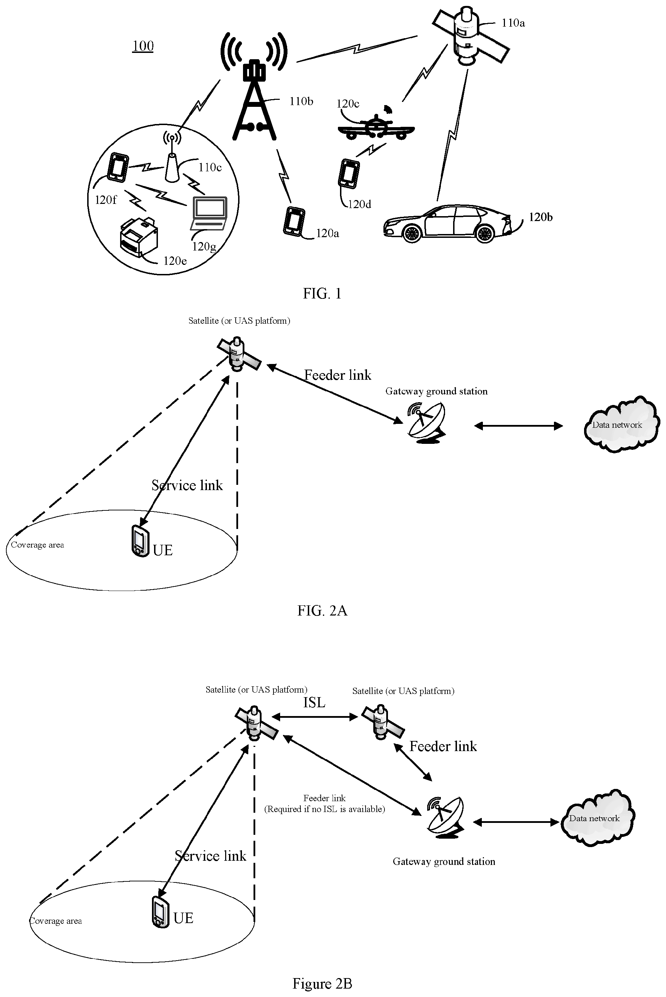

As shown in Figure 1, Figure 1 illustrates a schematic diagram of the architecture of a communication system 100 according to an embodiment of this application. The communication system 100 may include at least one network device (110a, 110b, 110c), and may also include at least one terminal device (120a-120g). The network device and the terminal device may be interconnected through wired or wireless means. Figure 1 is merely a schematic diagram, and the communication system may further include other network devices, such as wireless relay devices and wireless backhaul devices.

The network device provided in the embodiments of this application may be an access network device, such as a base station (base station), NodeB (Node B), evolved NodeB (evolved NodeB, eNodeB, or eNB), a transmission reception point (transmission reception point, TRP), a next generation NodeB (next generation NodeB, gNB) in a 5th generation (5th generation, 5G) mobile communication system, an access network device in an open radio access network (open radio access network, O-RAN, or open RAN), a next generation base station in a 6th generation (6th generation, 6G) mobile communication system, a base station in a future mobile communication system, an access node in a wireless fidelity (wireless fidelity, WiFi) system, or the like. Alternatively, the network device may be a module or unit that completes some functions of a base station, for example, may be a central unit (central unit, CU), a distributed unit (distributed unit, DU), a central unit control plane (CU control plane, CU-CP) module, a central unit user plane (CU user plane, CU-UP) module, or the like. The network device may be a satellite (for example, a satellite base station in FIG. 1), or may be a macro base station (for example, 110b in FIG. 1). The access network device may also be a micro base station or an indoor station (for example, 110c in FIG. 1), or may be a relay node, a donor node, or the like. This application does not limit a specific technology or a specific device form used for the access network device.

The terminal device provided in the embodiments of this application may also be referred to as a terminal, and includes but is not limited to user equipment (user equipment, UE), a mobile station, or a mobile terminal. The terminal device may be widely used in various scenarios for communication. These scenarios include but are not limited to at least one of the following scenarios: enhanced mobile broadband (enhanced mobile broadband, eMBB), ultra-reliable low-latency communication (ultra-reliable low-latency communication, URLLC), massive machine-type communications (massive machine-type communications, mMTC), device-to-device (device-to-device, D2D), vehicle to everything (vehicle to everything, V2X), machine type communication (machine-type communication, MTC), internet of things (internet of things, IOT), virtual reality, augmented reality, industrial control, self-driving, telemedicine, smart grid, smart home, smart office, smart wearable, smart transportation, smart city, or the like. The terminal device may be a mobile phone (such as the mobile phones 120a, 120d, and 120f in FIG. 1), a tablet computer, a computer with a wireless transceiver function (such as the computer 120g in FIG. 1), a wearable device, a vehicle (such as the vehicle 120b in FIG. 1), an unmanned aerial vehicle, a helicopter, an airplane (such as the airplane 120c in FIG. 1), a ship, a robot, an industrial robot arm, or a smart home device (such as the printer 120e in FIG. 1). This application does not limit the specific technologies or specific device forms used by the terminal device.

The base station and/or terminal device may be fixed in position or may be movable. The base station and/or terminal device may be deployed on land, including indoor or outdoor, handheld, or vehicle-mounted; or may be deployed on water; or may be deployed on an airplane, balloon, or artificial satellite in the air. This application does not limit the environment/scenario in which the base station and the terminal device are located. The base station and the terminal device may be deployed in the same or different environments/scenarios. For example, the base station and the terminal device may be simultaneously deployed on land; or the base station may be deployed on land while the terminal device is deployed on water, and so on, and no further examples will be provided.

The technical solutions of the embodiments of this application may be applied to various communication systems, for example, a long term evolution (long term evolution, LTE) system, a 5G system or new radio (new radio, NR), a non-terrestrial network (non-terrestrial networks, NTN), and future communication systems, such as a sixth generation mobile communication system. This application imposes no limitation thereto.

NR system information may be classified into three types: a master information block (MIB), a system information block 1 (SIB1), and other system information (other system information, OSI).

The MIB is system information that the UE needs to obtain immediately after completing cell search and frequency/time synchronization. The MIB is broadcast through a broadcast channel (broadcast channel, BCH), and the BCH and a synchronization channel (a primary synchronization signal (primary synchronization signal, PSS)/a secondary synchronization signal (secondary synchronization signal, SSS)) are combined, and are collectively referred to as an SS block (SSB). The MIB is system information that must be broadcast by a cell.

After obtaining the MIB, the UE must obtain the next system information SIB1. The information contained in SIB1 does not necessarily need to be the same as the information contained in the MIB. SIB1 is broadcast on a physical downlink shared channel (physical downlink shared channel, PDSCH), and mainly includes the following types of information: (1) cell selection parameters: necessary information for the UE to determine whether the signal of the cell meets the cell camping condition; (2) access control parameters: necessary information for the UE to determine whether an access service of a certain type is allowed to be initiated; (3) channel configuration information related to initial access: channel configuration information necessary for a random access process; (4) system information request configuration information; (5) scheduling information for other system information; (6) other information, such as whether a voice over Internet Protocol (VoIP) service is supported or not.

The OSI includes SIB2 to SIB21. Among these, OSIs related to mobility management include: (1) SIB2: common parameters for cell reselection; (2) SIB3: neighboring cell parameters for intra-frequency cell reselection; (3) SIB4: neighboring cell parameters for inter-frequency cell reselection; (4) SIB5: neighboring cell parameters for inter-RAT (radio access technology) cell reselection; and (5) SIB19: ephemeris information, including an ephemeris of the serving satellite and an ephemeris of a neighboring satellite.

The UE obtains the MIB, SIB1, and OSI in a time sequence. The MIB is broadcast together with the SSB. After the UE obtains the SSB through blind detection, the UE can obtain the MIB, where the MIB includes a search space parameter configuration for a physical downlink control channel (physical downlink control channel, PDCCH) of the SIB1. After obtaining the MIB, the UE obtains the SIB1 by detecting the PDCCH according to the search space parameter configuration for the PDCCH of the SIB1, where the SIB1 includes scheduling information for the OSI. Finally, the UE obtains the scheduling information of the OSI from the SIB1 and receives the OSI according to the scheduling information.

If the content of the system information is updated, the network device needs to notify the UE to update the system information. The NR system information update mechanism is performed through paging. UEs in the RRC idle state and UEs in the RRC inactive state always monitor the paging occasion that belongs to them. UEs in the RRC connected state monitor all paging occasions. If the network device needs to update system information related to public safety, the paging notification will also include a public warning system (PWS) flag. This flag will cause the UE to immediately initiate the system information acquisition procedure upon receiving the system information update notification. Other system information is generally obtained at the next system information update cycle to maintain time synchronization with the network device. The system information update cycle is usually an integer multiple of the discontinuous reception (DRX) cycle.

The NTN network provides typical scenarios for user equipment access, which include NTN scenarios with transparent payload and NTN scenarios with regenerative payload, as illustrated in Figure 2A, which is a schematic diagram of an NTN scenario based on a transparent payload. A transparent payload is a type of payload that modifies the frequency carrier of the uplink radio frequency (RF) signal and performs filtering and amplification before downlink transmission. This type of payload only has an RF processing unit and does not perform processing such as baseband demodulation, decoding, etc. Therefore, the signal waveform remains unchanged and is repeated. As shown in Figure 2B, which is a schematic diagram of an NTN scenario based on a regenerative payload. A regenerative payload is a type of payload that transforms and amplifies the uplink RF signal before downlink transmission. The transformation of the signal refers to digital processing, which may include demodulation, decoding, re-encoding, re-modulation, and/or filtering. In practice, this is equivalent to the satellite (or UAS platform) having some or all of the base station functions (such as a gNB).

Among these, an NTN network typically includes the following elements: 1. One or more gateway stations (gateways) that connect the NTN network to the public data network. 2. Feeder link: a wireless link between the gateway station and the satellite (or UAS platform). 3. Service link: a wireless link between the user equipment and the satellite (or UAS platform). 4. Satellites (or UAS platforms) that implement either transparent payload or regenerative payload. 5. Whether the satellite constellation has an inter-satellite link (ISL) is optional. An inter-satellite link requires the satellite to have a regenerative payload; that is, if an inter-satellite link is present, the satellite must have a regenerative payload. ISL can operate at RF frequency or in the optical band. 6. The UE is served by the satellite (or UAS platform) within the target service area.

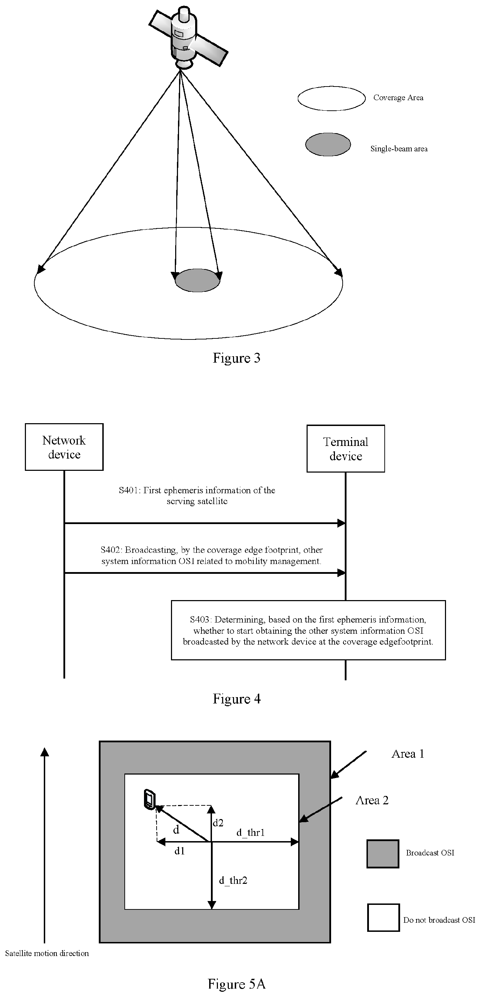

As shown in FIG. 3, FIG. 3 is a schematic diagram of a satellite coverage area. One of the most notable features of satellite communication is the large coverage area. Referring to the system parameters in TR 38.821, assuming the satellite's orbital altitude is 600 km and the scanning angle is 52.3° (at this time, the elevation angle of the terminal device is 30°), the coverage radius is approximately 850 km, and the coverage area is about 227 million square kilometers. In contrast, the coverage radius of a single satellite beam is 25 km (S-band, at the satellite subpoint), and the coverage area is about 2,000 square kilometers, thus a maximum of 1,135 beams are required to achieve full coverage.

The method of broadcasting system information in NR is similar to that in LTE. The transmission period of the MIB is 80 ms, while the transmission period of SIB1 is variable, not exceeding 160 ms. Other SIBs are combined to form an OSI for broadcasting. The OSI is broadcast at a fixed length within a window of a certain period in the time domain, and the broadcasts do not overlap each other. The PDCCH scheduling SIB1 and OSI is convolved with a specific UE identifier, namely the system information radio network temporary identity (SI-RNTI). However, in the scenario of a single satellite and a single cell, the number of footprints within the satellite's coverage area is large (up to 1,135), and broadcasting the OSI on all footprints within the satellite's coverage area would result in significant resource overhead.

To resolve the foregoing technical problem, embodiments of this application provide the following solutions.

As shown in FIG. 4, FIG. 4 is a schematic flowchart of a communication method according to an embodiment of this application. The method mainly includes the following steps:
S401: A network device sends first ephemeris information of a serving satellite, where the first ephemeris information includes first indication information, and the first indication information is used to indicate a threshold for a coverage edge footprint of the serving satellite.

Specifically, the network device may broadcast the first ephemeris information of the serving satellite in all footprints within a ground coverage area of the serving satellite. After selecting, reselecting, or switching to a cell of the network device, the terminal device may receive the first ephemeris information. The first ephemeris information may be included in the SIB19, and the first ephemeris information may further include ephemeris of the serving satellite. The ephemeris of the serving satellite may be used to determine a location of the serving satellite. The ephemeris may be an orbital parameter ephemeris, or may be a position and velocity state vector ephemeris. The orbital parameter ephemeris includes parameters such as an average argument of latitude (mean anomaly) of a satellite at an average time (epoch time), a semi-major axis (semi-major axis), an eccentricity (eccentricity), an argument of periapsis (argument of periapsis), a longitude of ascending node (longitude of ascending node), an inclination (inclination), and an average argument of latitude (mean anomaly) of a satellite at an average time (epoch time). The velocity state vector ephemeris includes a three-dimensional position vector and a three-dimensional velocity vector of the satellite at the reference time. Optionally, the first ephemeris information may further include coverage information of the serving satellite, a timing advance adjustment value, or the like. The coverage information includes at least one of the following information: a maximum scanning angle, a coverage radius, a maximum horizontal scanning angle, a maximum vertical scanning angle, a horizontal coverage width, or a vertical coverage width.

The shape of the ground coverage area of the serving satellite may be a circle, a rectangle, or another irregular shape. Correspondingly, the shape of the coverage edge footprint may be a circle, a rectangular ring, or another irregular shape.

Optionally, the network device may broadcast the MIB and SIB1 in all footprints within the ground coverage area of the serving satellite. After selecting, reselecting, or switching to a cell of the network device, the terminal device may receive the MIB and SIB1. The MIB is broadcast together with the SSB. After the terminal device obtains the SSB through blind detection, the terminal device can obtain the MIB. Then, the terminal device obtains the PDCCH search space parameter configuration of the SIB1 from the MIB, and obtains the SIB1 by detecting the PDCCH according to the PDCCH search space parameter configuration of the SIB1. Finally, the terminal device obtains the scheduling information of the OSI from the SIB1, so as to subsequently receive the OSI through the scheduling information.

S402: The network device broadcasts other system information OSI at the coverage edge footprint, where the OSI is related to mobility management.

It should be noted that the network device does not need to broadcast the OSI in all footprints within the ground coverage area of the serving satellite, but only broadcasts the OSI in the footprint at the coverage edge of the serving satellite, thereby reducing overhead of broadcast resources.

S403: The terminal device determines, based on the first ephemeris information, whether to start obtaining other system information OSI broadcast by the network device at the coverage edge footprint.

In an implementation, when the ground coverage area of the serving satellite is a rectangle, the first indication information includes a horizontal distance threshold and a vertical distance threshold. The horizontal distance threshold is a horizontal minimum distance between the reference location of the serving satellite and the footprint at the coverage edge of the broadcast OSI, and the vertical distance threshold is a vertical minimum distance between the reference location of the serving satellite and the footprint at the coverage edge of the broadcast OSI. The reference location of the serving satellite is a nadir point of the serving satellite (earth-moving scenario), or a center point of the ground coverage area of the serving satellite (earth-fixed scenario).

Specifically, the terminal device may determine, based on the location information of the terminal device and the ephemeris of the serving satellite, a horizontal distance component and a vertical distance component between the terminal device and the reference location of the serving satellite; and then determine, based on the horizontal distance component, the vertical distance component, and the first indication information, whether to initiate obtaining the OSI broadcast by the network device at the coverage edge footprint of the serving satellite.

Furthermore, when the horizontal distance component is greater than or equal to a horizontal distance threshold, or when the vertical distance component is greater than or equal to a vertical distance threshold, it is determined that the terminal device is at the coverage edge footprint of the serving satellite. If the terminal device is at the coverage edge footprint of the serving satellite and does not have a valid OSI, the terminal device initiates obtaining the OSI broadcast by the network device at the coverage edge footprint. When the horizontal distance component is less than the horizontal distance threshold and the vertical distance component is less than the vertical distance threshold, it is determined that the terminal device is not at the coverage edge footprint of the serving satellite. If the terminal device is not at the coverage edge footprint of the serving satellite or has a valid OSI, the terminal device does not initiate obtaining the OSI broadcast by the network device at the coverage edge footprint. "Not having a valid OSI" means that the OSI has not been obtained, the OSI has changed, or the ephemeris of the neighboring satellite has expired; "having a valid OSI" means that the OSI has been obtained, the OSI has not changed, or the ephemeris of the neighboring satellite has not expired. Since the terminal device initiates the OSI obtaining procedure only when it is at the coverage edge footprint, the network device does not need to page the terminal device to receive the OSI, thereby reducing paging overheads.

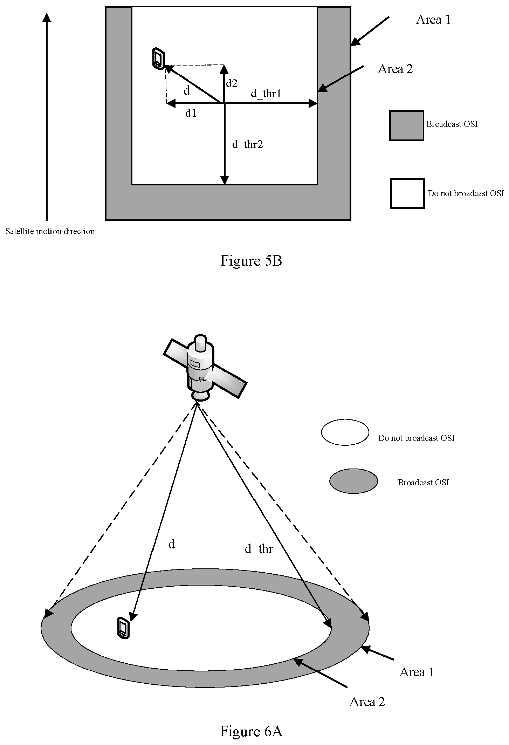

For example, as shown in FIG. 5A, FIG. 5A is a schematic diagram of a rectangular coverage scenario. Region 1 is a ground coverage area of the serving satellite, region 2 is a central coverage area within the ground coverage area, and the coverage edge footprint is the footprint of (region 1 - region 2), where the four sides of the rectangle are all at the coverage edge footprint. As shown in FIG. 5B, FIG. 5B is a schematic diagram of another rectangular coverage scenario. Region 1 is a ground coverage area of the serving satellite, region 2 is a central coverage area within the ground coverage area, and the coverage edge footprint is the footprint of (region 1 - region 2), where the coverage edge footprint is at three sides of the rectangle, while there is no coverage edge footprint at one side of the rectangle. Of course, the coverage edge footprint may also exist at two sides of the rectangle, while there is no coverage edge footprint at the other two sides of the rectangle. The coverage edge footprint may also be in another form, which is not limited in this application.

The network device may broadcast the first ephemeris information at all footprints in region 1, and broadcast the OSI at the coverage edge (region 1 - region 2) footprint. The horizontal distance threshold is the minimum horizontal distance d_th1 from the center point of the ground coverage area to the coverage edge footprint, and the vertical distance threshold is the minimum vertical distance d_th2 from the center point of the ground coverage area to the coverage edge footprint. The distance from the terminal device to the center point of the ground coverage area is d, where the horizontal distance component is d1, and the vertical distance component is d2. For the coverage edge footprint shown in FIG. 5A, the vertical component d2 calculated by the terminal device is parallel to the satellite movement direction, and is a scalar. For the coverage edge footprint shown in FIG. 5B, the positive direction of the vertical component d2 calculated by the terminal device is opposite to the satellite movement direction, and is a vector. It can be seen from the figure that the horizontal distance component d1 is less than the horizontal distance threshold d_th1, and the vertical distance component d2 is less than the vertical distance threshold d_th2, which means that the terminal device is not at the coverage edge footprint of the serving satellite, and therefore does not initiate the acquisition of the OSI broadcast by the network device at the coverage edge footprint.

In another implementation, in a scenario where the ground coverage area of the serving satellite is circular, the first indication information includes a first distance threshold or an elevation angle threshold. The first distance threshold may be a distance threshold between the terminal device and the serving satellite, a distance threshold between the terminal device and a reference location of the serving satellite, or a distance threshold between the terminal device and an edge of the ground coverage area of the serving satellite. The elevation angle threshold may be a threshold of an included angle between a line connecting the terminal device and the serving satellite and a tangent line of the Earth's surface, and the elevation angle threshold ranges from [0°, 90°]. The reference location of the serving satellite may be an earth-moving scenario (earth-moving scenario) or a center point of the ground coverage area of the serving satellite (earth-fixed scenario).

When the first distance threshold is the distance threshold between the terminal device and the serving satellite, the terminal device may determine the first distance between the terminal device and the serving satellite based on the location information of the terminal device and the ephemeris of the serving satellite; and then determine, based on the first distance and the first indication information, whether to initiate obtaining the OSI broadcast by the network device at the coverage edge footprint. Further, when the first distance is greater than or equal to the first distance threshold, it is determined that the terminal device is at the coverage edge footprint of the serving satellite; and if the terminal device is at the coverage edge footprint of the serving satellite and does not have a valid OSI, the terminal device initiates obtaining the OSI broadcast by the network device at the coverage edge footprint. When the first distance is less than the first distance threshold, it is determined that the terminal device is not at the coverage edge footprint of the serving satellite; and if the terminal device is not at the coverage edge footprint of the serving satellite or has a valid OSI, the terminal device does not initiate obtaining the OSI broadcast by the network device at the coverage edge footprint. Since the terminal device initiates the OSI obtaining procedure only when the terminal device is at the coverage edge footprint, the network device does not need to page the terminal device to receive the OSI, thereby reducing paging overheads.

For example, as shown in FIG. 6A, FIG. 6A is a schematic diagram of a circular coverage scenario. Area 1 is a ground coverage area of the serving satellite, area 2 is a coverage center area in the ground coverage area, the coverage edge footprint is (area 1 to area 2) footprint, and the surrounding positions of the circle edge are all the coverage edge footprints. The network device may broadcast the first ephemeris information at all footprints in the area 1, and broadcast the OSI at a coverage edge (area 1 to area 2) footprint. The first distance threshold is a distance threshold d_thr between the terminal device and the serving satellite. In other words, if the first distance d between the terminal device and the serving satellite is greater than or equal to d_thr, it is considered that the terminal device is at a coverage edge footprint, and the OSI obtaining process may be started. If the first distance d between the terminal device and the serving satellite is less than d_thr, it is considered that the terminal device is at a footprint of the coverage center area, and the OSI obtaining process is not started.

When the first distance threshold is the distance threshold between the terminal device and the reference position of the serving satellite, the terminal device may determine the second distance between the terminal device and the reference position of the serving satellite based on the location information of the terminal device and the ephemeris of the serving satellite. Then, it is determined, based on the second distance and the first indication information, whether to start obtaining the OSI broadcast by the network device at the coverage edge footprint. Further, when the second distance is greater than or equal to the first distance threshold, it is determined that the terminal device is located at the coverage edge footprint of the serving satellite. If the terminal device is located at the coverage edge footprint of the serving satellite and has no valid OSI, the terminal device starts to obtain the OSI broadcast by the network device at the coverage edge footprint. when the second distance is less than the first distance threshold, it is determined that the terminal device is not at the coverage edge footprint of the serving satellite, and if the terminal device is not at the coverage edge footprint of the serving satellite or has valid OSI, skipping starting to obtain the OSI broadcast by the network device at the coverage edge footprint. Because the terminal device starts the OSI obtaining procedure only when the terminal device is at a coverage edge footprint, the network device does not need to page the terminal device to receive the OSI, thereby reducing paging overheads.

When the first distance threshold is the distance threshold between the terminal device and the edge of the ground coverage area of the serving satellite, the terminal device may determine the ground coverage area of the serving satellite based on the ephemeris and the coverage information of the serving satellite, and then determine the third distance between the terminal device and the edge of the ground coverage area based on the location information of the terminal device and the ground coverage area. The coverage information may include a maximum scanning angle of the serving satellite, and the third distance is a minimum distance from the terminal device to the edge of the ground coverage area. The terminal device determines, based on the third distance and the first indication information, whether to initiate obtaining of other system information OSI broadcast by the network device at the coverage edge footprint. Further, when the third distance is less than or equal to the first distance threshold, the terminal device determines that the terminal device is at the coverage edge footprint of the serving satellite; and if the terminal device is at the coverage edge footprint of the serving satellite and does not have valid OSI, the terminal device initiates obtaining of the OSI broadcast by the network device at the coverage edge footprint. When the second distance is greater than the first distance threshold, the terminal device determines that the terminal device is not at the coverage edge footprint of the serving satellite; and if the terminal device is not at the coverage edge footprint of the serving satellite or has valid OSI, the terminal device does not initiate obtaining of the OSI broadcast by the network device at the coverage edge footprint. Since the terminal device initiates the OSI obtaining procedure only when the terminal device is at the coverage edge footprint, the network device does not need to page the terminal device to receive the OSI, thereby reducing paging overheads.

In addition, the terminal device may determine, based on the location information of the terminal device and the ephemeris of the serving satellite, a first included angle between a line connecting the terminal device to the serving satellite and a tangent line of the Earth surface; and determine, based on the first included angle and the first indication information, whether to start obtaining the OSI broadcast by the network device at the coverage edge footprint of the serving satellite. Further, when the first included angle is less than or equal to the elevation angle threshold, the terminal device determines that the terminal device is at the coverage edge footprint of the serving satellite; and if the terminal device is at the coverage edge footprint of the serving satellite and does not have a valid OSI, the terminal device starts obtaining the OSI broadcast by the network device at the coverage edge footprint of the serving satellite. When the first included angle is greater than the elevation angle threshold, the terminal device determines that the terminal device is not at the coverage edge footprint of the serving satellite; and if the terminal device is not at the coverage edge footprint of the serving satellite or has a valid OSI, the terminal device does not start obtaining the OSI broadcast by the network device at the coverage edge footprint of the serving satellite.

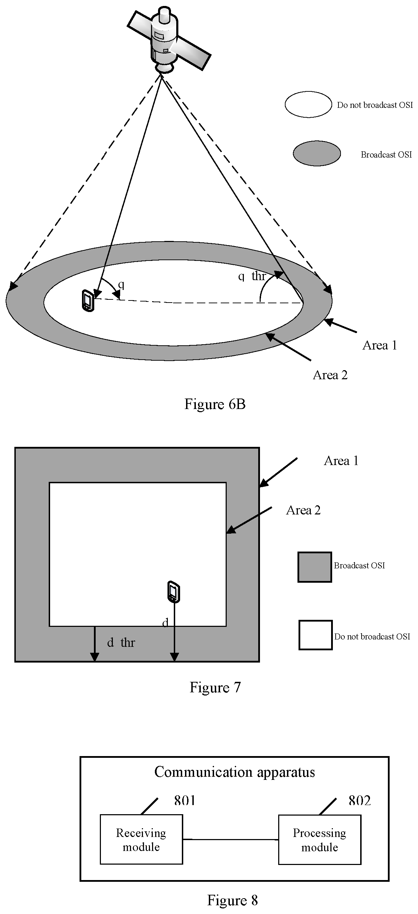

For example, as shown in FIG. 6B, FIG. 6B is a schematic diagram of another circular coverage scenario. Region 1 is a ground coverage area of the serving satellite, region 2 is a coverage center area within the ground coverage area, and the coverage edge footprint is the (region 1 - region 2) footprint, where the coverage edge footprint exists at all peripheral positions of the circle. The network device may broadcast the first ephemeris information at all footprints in region 1, and broadcast the OSI at the coverage edge (region 1 - region 2) footprint. The elevation angle threshold is a threshold value q_thr of an included angle between a line connecting the terminal device to the serving satellite and a tangent line of the Earth's surface, that is, if the first included angle q between the line connecting the terminal device to the serving satellite and the tangent line of the Earth's surface is less than or equal to q_thr, the terminal device is considered to be at the coverage edge footprint, and an OSI obtaining procedure may be initiated. If the first included angle q between the line connecting the terminal device to the serving satellite and the tangent line of the Earth's surface is greater than or equal to the elevation angle threshold q_thr, the terminal device is considered to be at a footprint in the coverage center area, and an OSI obtaining procedure is not initiated.

In another implementation, in a scenario where the ground coverage area of the serving satellite is not a circle, the first indication information includes a second distance threshold, where the second distance threshold is a distance threshold between the terminal device and the edge of the ground coverage area of the serving satellite. The first ephemeris information further includes the ephemeris and coverage information of the serving satellite. For example, if the ground coverage area is a rectangle, the coverage information may include a maximum horizontal scanning angle and a maximum vertical scanning angle.

Specifically, the terminal device may determine the ground coverage area of the serving satellite based on the ephemeris and coverage information of the serving satellite; then determine, based on the location information of the terminal device and the ground coverage area, a minimum distance between the terminal device and the edge of the ground coverage area; and determine, based on the minimum distance and the first indication information, whether to initiate obtaining of other system information OSI broadcast by the network device at the coverage edge footprint. Further, when the minimum distance is less than or equal to the second distance threshold, the terminal device determines that the terminal device is at the coverage edge footprint of the serving satellite; and if the terminal device is at the coverage edge footprint of the serving satellite and does not have valid OSI, the terminal device initiates obtaining of the OSI broadcast by the network device at the coverage edge footprint. When the minimum distance is greater than the second distance threshold, the terminal device determines that the terminal device is not at the coverage edge footprint of the serving satellite; and if the terminal device is not at the coverage edge footprint of the serving satellite or does not have valid OSI, the terminal device does not initiate obtaining of the OSI broadcast by the network device at the coverage edge footprint. Since the terminal device initiates the OSI obtaining procedure only when it is at the coverage edge footprint, the network device does not need to page the terminal device to receive the OSI, thereby reducing paging overhead.

For example, as shown in FIG. 7, FIG. 7 is a schematic diagram of a non-circular coverage scenario. Region 1 is a ground coverage area of the serving satellite, region 2 is a coverage center area within the ground coverage area, and the coverage edge footprint is (region 1 - region 2) footprint, where the footprints at the four edges of the rectangle are all coverage edge footprints. The network device may broadcast the first ephemeris information on all footprints in region 1, and broadcast the OSI on the coverage edge (region 1 - region 2) footprint. The second distance threshold is a distance threshold d_thr between the terminal device and the edge of the ground coverage area of the serving satellite, that is, if a minimum distance d between the terminal device and the edge of the ground coverage area of the serving satellite is less than or equal to d_thr, the terminal device is considered to be at the coverage edge footprint, and an OSI obtaining procedure is initiated. If the minimum distance d between the terminal device and the edge of the ground coverage area of the serving satellite is greater than d_thr, the terminal device is considered to be at a footprint in the coverage center area, and the OSI obtaining procedure is not initiated.

Optionally, the terminal device may receive the OSI based on the scheduling information obtained from the SIB1, then obtain the cell reselection parameter and/or the second ephemeris information of the neighboring satellite from the OSI, and perform cell reselection or cell handover based on the cell reselection parameter or the second ephemeris information, so as to reselect or switch to a cell of the neighboring satellite, thereby ensuring communication quality between the terminal device and the satellite. The cell reselection parameter may include a common parameter for cell reselection, a neighboring cell parameter for intra-frequency cell reselection, a neighboring cell parameter for inter-frequency cell reselection, a neighboring cell parameter for inter-RAT cell reselection, or the like.

In this embodiment of this application, the network device broadcasts the OSI related to mobility management only at the coverage edge footprint of the serving satellite, thereby reducing broadcast resource overheads without affecting the terminal device in performing cell reselection/conditional handover. The terminal device determines, based on the threshold value of the coverage edge footprint of the serving satellite indicated by the first indication information, whether the terminal device is at the coverage edge footprint. If the terminal device is at the coverage edge footprint, the terminal device initiates an OSI obtaining procedure, and the network device does not need to page the terminal device to receive the OSI, thereby reducing paging overheads. If the terminal device is not at the coverage edge footprint, the terminal device does not initiate the OSI obtaining procedure, thereby reducing power consumption of the terminal device.

It may be understood that, in the foregoing method embodiments, the methods and operations implemented by the terminal device may alternatively be implemented by a component (for example, a chip or a circuit) that can be used in the terminal device, and the methods and operations implemented by the network device may alternatively be implemented by a component (for example, a chip or a circuit) that can be used in the network device.

In embodiments of this application, function module division of the terminal device or the network device may be performed according to the foregoing method examples. For example, each function module may be obtained through division based on each corresponding function, or two or more functions may be integrated into one processing module. The integrated module may be implemented in a form of hardware, or may be implemented in a form of a software function module. It should be noted that the module division in embodiments of this application is an example, and is merely logical function division, and may be other division in actual implementation. The following uses an example in which each function module is obtained through division based on each corresponding function for description.

The foregoing method provided in embodiments of this application is described in detail with reference to FIG. 4. The following describes in detail a communication apparatus provided in embodiments of this application with reference to FIG. 8 to FIG. 9. It should be understood that descriptions of the apparatus embodiments correspond to descriptions of the method embodiments. Therefore, for content that is not described in detail, refer to the foregoing method embodiments. For brevity, details are not described herein again.

Please refer to FIG. 8, which is a schematic structural diagram of a communications apparatus according to an embodiment of this application. The communications apparatus may include a receiving module 801 and a processing module 802.

The communications apparatus may implement steps or procedures performed by the terminal device in the corresponding method embodiments. For example, the communications apparatus may be a terminal device, or a chip or circuit configured in a terminal device. The receiving module 801 is configured to perform receive/transmit-related operations on a terminal device side in the foregoing method embodiments, and the processing module 802 is configured to perform processing-related operations of the terminal device in the foregoing method embodiments.

The receiving module 801 is configured to receive first ephemeris information of a serving satellite sent by a network device, wherein the first ephemeris information comprises first indication information, and the first indication information is used to indicate a threshold for a coverage edge footprint of the serving satellite;
a processing module 802, configured to determine, based on the first ephemeris information, whether to enable obtaining of another system information OSI broadcast by the network device at the coverage edge footprint, wherein the OSI is related to mobility management;

Optionally, the first ephemeris information further includes the ephemeris of the serving satellite. The processing module 802 is further configured to determine, based on the location information of the terminal device and the ephemeris of the serving satellite, a horizontal distance component and a vertical distance component between the terminal device and the reference location of the serving satellite; and determine, based on the horizontal distance component, the vertical distance component, and the first indication information, whether to start obtaining the OSI broadcast by the network device at the coverage edge footprint of the serving satellite.

Optionally, the first indication information includes a horizontal distance threshold and a vertical distance threshold; and the processing module 802 is further configured to: when the horizontal distance component is greater than or equal to the horizontal distance threshold, or the vertical distance component is greater than or equal to the vertical distance threshold, determine that the terminal device is at the coverage edge footprint of the serving satellite, and start obtaining the OSI broadcast by the network device at the coverage edge footprint of the serving satellite; or when the horizontal distance component is less than the horizontal distance threshold and the vertical distance component is less than the vertical distance threshold, determine that the terminal device is not at the coverage edge footprint of the serving satellite, and do not start obtaining the OSI broadcast by the network device at the coverage edge footprint of the serving satellite.

Optionally, the reference location of the serving satellite is the location under the serving satellite or a center point of the ground coverage area of the serving satellite.

Optionally, the first ephemeris information further includes the ephemeris of the serving satellite, and the processing module 802 is further configured to determine, based on the location information of the terminal device and the ephemeris of the serving satellite, a first distance between the terminal device and the serving satellite; and determine, based on the first distance and the first indication information, whether to start obtaining the OSI broadcast by the network device at the coverage edge footprint of the serving satellite.

Optionally, the first indication information includes a first distance threshold; and the processing module is further configured to: when the first distance is greater than or equal to the first distance threshold, determine that the terminal device is at the coverage edge footprint of the serving satellite, and start obtaining the OSI broadcast by the network device at the coverage edge footprint of the serving satellite; or when the first distance is less than the first distance threshold, determine that the terminal device is not at the coverage edge footprint of the serving satellite, and do not start obtaining the OSI broadcast by the network device at the coverage edge footprint of the serving satellite.

Optionally, the first ephemeris information further includes the ephemeris of the serving satellite. The processing module 802 is further configured to determine, based on the location information of the terminal device and the ephemeris of the serving satellite, a first included angle between a line connecting the terminal device to the serving satellite and a tangent line of the Earth surface; and determine, based on the first included angle and the first indication information, whether to start obtaining the OSI broadcast by the network device at the coverage edge footprint for the terminal device.

Optionally, the first indication information includes an elevation angle threshold; and the processing module 802 is further configured to: when the first included angle is less than or equal to the elevation angle threshold, determine that the terminal device is at the coverage edge footprint of the serving satellite, and start obtaining the OSI broadcast by the network device at the coverage edge footprint of the terminal device; or when the first included angle is greater than the elevation angle threshold, determine that the terminal device is not at the coverage edge footprint of the serving satellite, and do not start obtaining the OSI broadcast by the network device at the coverage edge footprint for the terminal device.

Optionally, the first ephemeris information further includes the ephemeris and coverage information of the serving satellite. The processing module 802 is further configured to determine, based on the ephemeris and the coverage information of the serving satellite, a ground coverage area of the serving satellite; determine, based on the location information of the terminal device and the ground coverage area, a minimum distance between the terminal device and an edge of the ground coverage area; and determine, based on the minimum distance and the first indication information, whether to start obtaining the other system information OSI broadcast by the network device at the coverage edge footprint.

Optionally, the first indication information includes a second distance threshold; and the processing module 802 is further configured to: when the minimum distance is less than or equal to the second distance threshold, determine that the terminal device is at the coverage edge footprint of the serving satellite, and start obtaining the OSI broadcast by the network device at the coverage edge footprint; or when the minimum distance is greater than the second distance threshold, determine that the terminal device is not at the coverage edge footprint of the serving satellite, and do not start obtaining the OSI broadcast by the network device at the coverage edge footprint.

Optionally, the coverage information includes at least one of the following information: a maximum scanning angle, a coverage radius, a maximum horizontal scanning angle, a maximum vertical scanning angle, a horizontal coverage width, or a vertical coverage width.

Optionally, the processing module 802 is further configured to obtain a cell reselection parameter and/or second ephemeris information of a neighboring satellite from the OSI; and perform cell reselection or cell handover based on the cell reselection parameter and/or the second ephemeris information.

It should be noted that for an implementation of each module, reference may be made to corresponding descriptions of the method embodiment shown in FIG. 4 for performing the methods and functions performed by the terminal device in the foregoing embodiment.

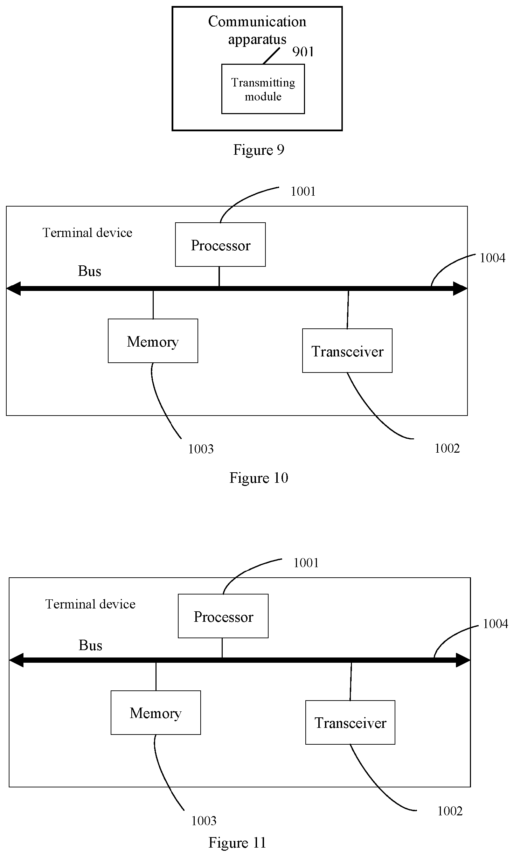

Referring to FIG. 9, FIG. 9 is a schematic structural diagram of a communications apparatus according to an embodiment of this application. The communications apparatus may include a sending module 901. The communications apparatus may implement steps or procedures performed by the network device in the foregoing method embodiments. For example, the communications apparatus may be a network device, or a chip or circuit configured in a network device. The sending module 901 is configured to perform a receiving and sending-related operation on a network device side in the foregoing method embodiments.
a sending module 901, configured to send first ephemeris information of a serving satellite, wherein the first ephemeris information comprises first indication information, and the first indication information is used to indicate a threshold for a coverage edge footprint of the serving satellite;
the sending module 901 is further configured to broadcast other system information OSI at the coverage edge footprint, wherein the OSI is related to mobility management.

Optionally, the first ephemeris information further includes at least one of the following information: ephemeris information of the serving satellite, or coverage information of the serving satellite.

Optionally, the first indication information includes at least one of the following information: a horizontal distance threshold and a vertical distance threshold between the terminal device and the reference location of the serving satellite, an elevation angle threshold between an inclination of a line connecting the terminal device to the serving satellite and a tangent of an earth surface, a first distance threshold between the terminal device and the serving satellite, and a second distance threshold between the terminal device and an edge of a ground coverage area of the serving satellite.

Optionally, the reference location of the serving satellite is the nadir point of the serving satellite on the earth, or the center point of the ground coverage area of the serving satellite.

It should be noted that implementation of each module may further correspondingly refer to the corresponding descriptions in the method embodiment shown in FIG. 4, to perform the methods and functions performed by the network device in the foregoing embodiment.

FIG. 10 is a schematic structural diagram of a terminal device according to an embodiment of this application. The terminal device may be applied to the system shown in FIG. 1, FIG. 2A, and FIG. 2B, to perform functions of the terminal device in the foregoing method embodiments, or implement steps or procedures performed by the terminal device in the foregoing method embodiments.

As shown in FIG. 10, the terminal device includes a processor 1001 and a transceiver 1002. Optionally, the terminal device further includes a memory 1003. The processor 1001, the transceiver 1002, and the memory 1003 may communicate with each other through an internal connection path, and transfer a control signal and/or a data signal. The memory 1003 is configured to store a computer program, and the processor 1001 is configured to invoke the computer program from the memory 1003 and run the computer program, to control the transceiver 1002 to receive or send a signal. Optionally, the terminal device may further include an antenna, configured to send, by using a radio signal, uplink data or uplink control signaling output by the transceiver 1002.

The processor 1001 and the memory 1003 may be combined into one processing apparatus, where the processor 1001 is configured to execute program code stored in the memory 1003 to implement the foregoing functions. During specific implementation, the memory 1003 may alternatively be integrated into the processor 1001, or be independent of the processor 1001. The processor 1001 may correspond to the processing module in FIG. 8.

The transceiver 1002 may correspond to the receiving module in FIG. 8, and may also be referred to as a transceiver unit or a transceiver module. The transceiver 1002 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that the terminal device shown in FIG. 10 can implement each process of the terminal device in the method embodiment shown in FIG. 4. Operations and/or functions of the modules in the terminal device are respectively intended to implement corresponding procedures in the foregoing method embodiments. For details, refer to the descriptions in the foregoing method embodiments. To avoid repetition, detailed descriptions are appropriately omitted herein.

The processor 1001 may be configured to perform an action that is implemented inside the terminal device and described in the foregoing method embodiment, and the transceiver 1002 may be configured to perform an action that is described in the foregoing method embodiment and that is sent by the terminal device to the terminal device or received from the terminal device. For details, refer to the description in the foregoing method embodiment, and details are not described herein again.

The processor 1001 may be a central processing unit, a general-purpose processor, a digital signal processor, an application-specific integrated circuit, a field programmable gate array or another programmable logic device, a transistor logic device, a hardware component, or any combination thereof. It may implement or perform various example logical blocks, modules, and circuits described with reference to the content disclosed in this application. Alternatively, the processor 1001 may be a combination that implements a computing function, for example, a combination that includes one or more microprocessors, a combination of a digital signal processor and a microprocessor, or the like. The communications bus 1004 may be a peripheral component interconnect standard PCI bus, an extended industry standard structure EISA bus, or the like. The bus may be divided into an address bus, a data bus, a control bus, and the like. For ease of representation, only one thick line is used in FIG. 10 for representation, but it does not indicate that there is only one bus or only one type of bus. The communications bus 1004 is configured to implement connection and communication between these components. The transceiver 1002 in this embodiment of this application is configured to perform signaling or data communication with another node device. The memory 1003 may include a volatile memory, for example, a nonvolatile dynamic random access memory (nonvolatile random access memory, NVRAM), a phase change random access memory (phase change RAM), PRAM), a magnetoresistive random access memory (magetoresistive RAM, MRAM), and the like, may further include a nonvolatile memory, for example, at least one magnetic disk storage device, an electronic erasable programmable read-only memory (electrically erasable programmable read-only memory, EEPROM), or a flash memory device. such as a nor flash memory (NOR flash memory) or a nor flash memory (NAND flash memory), a semiconductor device, such as a solid state disk (solid state disk, SSD), or the like. Optionally, the memory 1003 may be at least one storage apparatus located away from the foregoing processor 1001. Optionally, the memory 1003 may further store a group of computer program code or configuration information. Optionally, the processor 1001 may further execute a program stored in the memory 1003. The processor may cooperate with the memory and the transceiver to perform any method and function of the terminal device in the embodiments of the foregoing application.

FIG. 11 is a schematic structural diagram of a network device according to an embodiment of this application. The network device may be applied to the system shown in FIG. 1, FIG. 2A, and FIG. 2B, to perform functions of the network device in the foregoing method embodiments, or implement steps or procedures performed by the network device in the foregoing method embodiments.

As shown in FIG. 11, the network device includes a processor 1101 and a transceiver 1102. Optionally, the network device further includes a memory 1103. The processor 1101, the transceiver 1102, and the memory 1103 may communicate with each other through an internal connection path to transfer control and/or data signals. The memory 1103 is configured to store a computer program, and the processor 1101 is configured to invoke the computer program from the memory 1103 and run the computer program, to control the transceiver 1102 to receive and send a signal. Optionally, the network device may further include an antenna, configured to send, by using a radio signal, uplink data or uplink control signaling output by the transceiver 1102.

The processor 1101 and the memory 1103 may be combined into one processing apparatus, where the processor 1101 is configured to execute program code stored in the memory 1103 to implement the foregoing functions. During specific implementation, the memory 1103 may alternatively be integrated into the processor 1101, or be independent of the processor 1101.

The transceiver 1102 may correspond to the sending module in FIG. 9, and may also be referred to as a transceiver unit or a transceiver module. The transceiver 1102 may include a receiver (or referred to as a receiver machine or a receiver circuit) and a transmitter (or referred to as a transmitter machine or a transmitter circuit). The receiver is configured to receive a signal, and the transmitter is configured to transmit a signal.

It should be understood that the network device shown in FIG. 11 can implement each process of the network device in the method embodiment shown in FIG. 4. Operations and/or functions of the modules in the network device are respectively intended to implement corresponding procedures in the foregoing method embodiments. For details, refer to the descriptions in the foregoing method embodiments. To avoid repetition, detailed descriptions are appropriately omitted herein.

The processor 1101 may be configured to perform the actions implemented internally by the network device as described in the foregoing method embodiments, and the transceiver 1102 may be configured to perform the actions of sending by the network device to another network device or receiving from the network device as described in the foregoing method embodiments. For details, refer to the descriptions in the foregoing method embodiments, and details are not described herein again.

The processor 1101 may be any one of the foregoing types of processors. The communication bus 1104 may be a peripheral component interconnect (PCI) bus, an extended industry standard architecture (EISA) bus, or the like. The bus may be classified into an address bus, a data bus, a control bus, and the like. For ease of representation, only one thick line is used to represent the bus in FIG. 11, but this does not indicate that there is only one bus or only one type of bus. The communication bus 1104 is configured to implement connection and communication between these components. The transceiver 1102 of the device in the embodiments of this application is configured to communicate signaling or data with another device. The memory 1103 may be any one of the foregoing types of memories. Optionally, the memory 1103 may further be at least one storage apparatus located away from the foregoing processor 1101. The memory 1103 stores a set of computer program code or configuration information, and the processor 1101 executes the program stored in the memory 1103. The processor may cooperate with the memory and the transceiver to perform any method and function of the network device in the foregoing embodiments of this application.

An embodiment of this application further provides a chip system, where the chip system includes a processor, configured to support a terminal device or a network device to implement the functions involved in any one of the foregoing embodiments, for example, generating or processing the first ephemeris information involved in the foregoing method.

In a possible design, the chip system may further include a memory, where the memory is configured to store a computer program and data necessary for the terminal device or the network device. The chip system may be formed by a chip, or may include the chip and other discrete components. The input and output of the chip system correspond to the receiving and sending operations of the terminal device or the network device in the method embodiment, respectively.

According to the method provided in the embodiments of this application, this application further provides a computer program product. The computer program product includes a computer program, where when the computer program is run on a computer, the computer is enabled to perform the method in any one of the embodiments illustrated in Figure 4.

According to the method provided in the embodiments of this application, this application further provides a computer-readable medium, where the computer-readable medium stores a computer program, and when the computer program is run on a computer, the computer is enabled to perform the method in any one of the embodiments illustrated in Figure 4.

According to the method provided in the embodiments of this application, this application further provides a communications system, which includes the one or more terminal devices and the one or more network devices mentioned above.

The foregoing embodiments may be implemented entirely or partially through software, hardware, firmware, or any combination thereof. When software is used to implement the embodiments, the embodiments may be implemented entirely or partially in a form of a computer program product. The computer program product includes one or more computer instructions. When the computer instructions are loaded and executed on a computer, the procedure or functions according to the embodiments of this application are all or partially generated. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by the computer, or a data storage device, such as a server or a data center, integrating one or more usable media. The usable medium may be a magnetic medium (for example, a floppy disk, a hard disk drive, or a magnetic tape), an optical medium (for example, a digital video disc (digital video disc, DVD)), a semiconductor medium (for example, a solid state disk (solid state disc, SSD)), or the like.

The foregoing descriptions are merely specific implementations of this application, but the protection scope of this application is not limited thereto. Any variation or replacement readily figured out by a person skilled in the art within the technical scope disclosed in this application should fall within the protection scope of this application. Therefore, the protection scope of this application should be determined according to the protection scope of the claims.

## Claims

1. A communication method, wherein the method comprises:
receiving first ephemeris information of a serving satellite sent by a network device, wherein the first ephemeris information comprises first indication information, and the first indication information is used to indicate a threshold for a coverage edge footprint of the serving satellite;
determining, based on the first ephemeris information, whether to start obtaining other system information OSI broadcast by the network device at the coverage edge footprint, wherein the OSI is related to mobility management.

2. The method according to claim 1, wherein the first ephemeris information further comprises the ephemeris of the serving satellite, and the determining, based on the first ephemeris information, whether to start obtaining other system information OSI broadcast by the network device at the coverage edge footprint includes:
determining, based on the location information of the terminal device and the ephemeris of the serving satellite, a horizontal distance component and a vertical distance component between the terminal device and a reference location of the serving satellite;
determining, based on the horizontal distance component, the vertical distance component, and the first indication information, whether to start obtaining the OSI broadcast by the network device at the coverage edge footprint.

3. The method according to claim 2, wherein the first indication information comprises a horizontal distance threshold and a vertical distance threshold; and the determining, based on the horizontal distance component, the vertical distance component, and the first indication information, whether to start obtaining the OSI broadcast by the network device at the coverage edge footprint includes:
when the horizontal distance component is greater than or equal to the horizontal distance threshold, or when the vertical distance component is greater than or equal to the vertical distance threshold, determining that the terminal device is at the coverage edge footprint of the serving satellite, and starting to obtain the OSI broadcasted by the network device at the coverage edge footprint;
when the horizontal distance component is less than the horizontal distance threshold, and when the vertical distance component is less than the vertical distance threshold, determining that the terminal device is not at the coverage edge footprint of the serving satellite, and not starting to obtain the OSI broadcasted by the network device at the coverage edge footprint.

4. The method according to claim 2 or 3, wherein the reference location of the serving satellite is the location at which the serving satellite is directly above the Earth, or the center point of the ground coverage area of the serving satellite.

5. The method according to claim 1, wherein the first ephemeris information further comprises the ephemeris of the serving satellite, and the determining, based on the first ephemeris information, whether to start obtaining other system information OSI broadcasted by the network device at the coverage edge footprint comprises:
determining, based on the location information of the terminal device and the ephemeris of the serving satellite, a first distance between the terminal device and the serving satellite;
determining, based on the first distance and the first indication information, whether to start obtaining the OSI broadcast by the network device at the coverage edge footprint of the serving satellite.

6. The method according to claim 5, wherein the first indication information comprises a first distance threshold; and the determining, based on the first distance and the first indication information, whether to start obtaining the OSI broadcast by the network device at the coverage edge footprint of the serving satellite comprises:
when the first distance is greater than or equal to the first distance threshold, determining that the terminal device is at the coverage edge footprint of the serving satellite, and starting obtaining the OSI broadcast by the network device at the coverage edge footprint of the serving satellite;
when the first distance is less than the first distance threshold, determining that the terminal device is not at the coverage edge footprint of the serving satellite, and not starting obtaining the OSI broadcast by the network device at the coverage edge footprint of the serving satellite.

7. The method according to claim 1, wherein the first ephemeris information further comprises the ephemeris of the serving satellite, and the determining, based on the first ephemeris information, whether to start obtaining other system information OSI broadcast by the network device at the coverage edge footprint comprises:
determining, based on the location information of the terminal device and the ephemeris of the serving satellite, a first included angle between a line connecting the terminal device to the serving satellite and a tangent line of the earth surface;
determining, based on the first included angle and the first indication information, whether to start obtaining the OSI broadcast by the network device at the coverage edge footprint.

8. The method according to claim 7, wherein the first indication information comprises an elevation angle threshold; and the determining, based on the first included angle and the first indication information, whether to start obtaining the OSI broadcast by the network device at the coverage edge footprint comprises:
when the first included angle is less than or equal to the elevation angle threshold, determining that the terminal device is at the coverage edge footprint of the serving satellite, and starting obtaining the OSI broadcast by the network device at the coverage edge footprint;
when the first included angle is greater than the elevation angle threshold, determining that the terminal device is not at the coverage edge footprint of the serving satellite, and not starting to obtain the OSI broadcast by the network device at the coverage edge footprint.

9. The method according to claim 1, wherein the first ephemeris information further comprises ephemeris information and coverage information of the serving satellite, and the determining, based on the first ephemeris information, whether to start obtaining another system information OSI broadcast by the network device at the coverage edge footprint comprises:
determining a ground coverage area of the serving satellite based on the ephemeris information of the serving satellite and the coverage information;
determining, based on the location information of the terminal device and the ground coverage area, a minimum distance between the terminal device and an edge of the ground coverage area;
determining, based on the minimum distance and the first indication information, whether to start obtaining the other system information OSI broadcast by the network device at the coverage edge footprint.

10. The method according to claim 9, wherein the first indication information comprises a second distance threshold; and the determining, based on the minimum distance and the first indication information, whether to start obtaining other system information OSI broadcast by the network device at the coverage edge footprint of the serving satellite comprises:
when the minimum distance is less than or equal to the second distance threshold, determining that the terminal device is at the coverage edge footprint of the serving satellite, and starting obtaining the OSI broadcast by the network device at the coverage edge footprint of the serving satellite;
when the minimum distance is greater than the second distance threshold, determining that the terminal device is not at the coverage edge footprint of the serving satellite, and not starting obtaining the OSI broadcast by the network device at the coverage edge footprint of the serving satellite.

11. The method according to claim 9 or 10, wherein the coverage information comprises at least one of the following information: a maximum scanning angle, a coverage radius, a maximum horizontal scanning angle, a maximum vertical scanning angle, a horizontal coverage width, or a vertical coverage width.

12. The method according to any one of claims 1 to 11, wherein the method further comprises:
obtaining a cell reselection parameter and/or second ephemeris information of a neighboring satellite from the OSI;
performing cell reselection or cell handover based on the cell reselection parameter and/or the second ephemeris information.

13. A communication method, wherein the method comprises:
sending first ephemeris information of a serving satellite, wherein the first ephemeris information comprises first indication information, and the first indication information is used to indicate a threshold for a coverage edge footprint of the serving satellite; and
broadcasting other system information OSI at the coverage edge footprint, wherein the OSI is related to mobility management.

14. The method according to claim 13, wherein the first ephemeris information further comprises at least one of the following information: ephemeris information of the serving satellite, or coverage information of the serving satellite.

15. The method according to claim 13 or 14, wherein the first indication information comprises at least one of the following information:
a horizontal distance threshold and a vertical distance threshold between the terminal device and the reference location of the serving satellite, an elevation angle threshold of an angle of inclination between a line connecting the terminal device and the serving satellite and a tangent of the Earth surface, a first distance threshold between the terminal device and the serving satellite, and a second distance threshold between the terminal device and an edge of a ground coverage area of the serving satellite.

16. The method according to claim 15, wherein the reference location of the serving satellite is the nadir point of the serving satellite on the Earth, or a center point of the ground coverage area of the serving satellite.

17. A communication apparatus, comprising a memory and a processor, wherein the memory is configured to store a computer program, and the processor runs the computer program to enable the communication apparatus to perform the method according to any one of claims 1 to 12.

18. A communication apparatus, comprising a memory and a processor, wherein the memory is configured to store a computer program, and the processor runs the computer program to enable the communication apparatus to perform the method according to any one of claims 13 to 16.

19. A computer-readable storage medium, wherein the computer-readable storage medium comprises a computer program, and when the computer program is run by a processor, the method according to any one of claims 1 to 16 is implemented.

20. A chip, wherein the chip comprises a processor and a communication interface, the communication interface is configured to communicate with an external device or an internal device, and the processor is configured to implement the method according to any one of claims 1 to 16.
